# EUROPÄISCHE PATENTSCHRIFT

(11) **EP 1 715 573 B1**
(45) Veröffentlichungstag und Bekanntmachung des Hinweises auf die Patenterteilung: **17.06.2020**
(21) Anmeldenummer: 05008665.1
(22) Anmeldetag: 20.04.2005
(51) Int. Cl.: H02P 5/68, H02P 7/29

(54) **Verfahren und Vorrichtung zum Betreiben von elektrischen Verbrauchern**
Method and device for driving electrical loads
Méthode et dispositif pour entrainer des charges électriques

(43) Veröffentlichungstag der Anmeldung: 25.10.2006
(73) Patentinhaber: Brose Fahrzeugteile SE & Co. Kommanditgesellschaft, Würzburg, 97076 Würzburg (DE)
(72) Erfinder: Kuschnarew, Christian, 97076 Würzburg (DE)
(74) Vertreter: Isarpatent

(56) Entgegenhaltungen:
- EP-A- 0 827 266
- EP-A- 1 347 567
- EP-A- 1 416 625
- EP-A1- 1 347 566
- DE-A1- 3 720 683
- DE-A1- 10 316 641
- US-A- 5 309 349
- US-A- 5 874 818
- US-A- 2002 167 300
- US-A1- 2005 019 024
- FREDE BLAABJERG ET AL: "Single Current Sensor Technique in the DC Link of Three-Phase PWM-VS Inverters: A Review and a Novel Solution", 19970901; 19970900, vol. 33, no. 5, 1 September 1997 (1997-09-01), pages 1241-1253, XP011022258,

## Beschreibung

Die Erfindung betrifft ein Verfahren zum Betreiben einer Anzahl von elektrischen Lasten oder Verbrauchern, insbesondere von mindestens zwei Elektro- oder Gleichstrommotoren, gemäß dem Oberbegriff des Anspruchs 1. Die Erfindung bezieht sich weiter auf eine danach arbeitende Vorrichtung. Ein derartiges Verfahren und eine solche Vorrichtung sind aus der DE 103 16 641 A1 bekannt.

Beim Betrieb einer Anzahl von Elektromotoren, insbesondere zweier Elektromotoren, werden diese häufig mit einer diesen gemeinsamen Ansteuerungsvorrichtung angesteuert. Diese stellt in Abhängigkeit vom gewünschten oder geforderten Betriebszustand der Elektromotoren, insbesondere in Abhängigkeit von der jeweils ausgewählten oder eingestellten Motordrehzahl, bestimmte Ein- und Ausschaltzyklen ein. Dabei erfolgt in der Regel während eines Ausschaltzyklus die Aufladung eines Kondensators, insbesondere eines Elektrolyt-Kondensators, der an eine den Last- oder Motorstrom liefernde Strom- oder Spannungsquelle versorgungsseitig angeschlossenen ist. Im darauf folgenden Einschaltzyklus liefert der als Energiezwischenspeicher wirksame Kondensator (Zwischenkreiskondensator) in Folge dessen Entladung einen bestimmten Stromanteil am für den jeweiligen Betriebszustand erforderlichen Betriebs- oder Laststrom der Elektromotoren.

Bei dieser Betriebsart einer üblicherweise elektronischen Ansteuerungsvorrichtung unter Verwendung von Elektrolyt-Kondensatoren ist zu berücksichtigen, dass die Betriebssicherheit eines Elektrolyt-Kondensators von dessen Betriebstemperatur und/oder von dessen Wechselstrombelastung abhängt. So kann ein Überschreiten entsprechender kondensatorspezifischer Temperatur- oder Belastungswerte zu einer erheblichen Begrenzung der Lebensdauer oder sogar zur Zerstörung des Kondensators führen. Eine die Betriebssicherheit gefährdende Betriebstemperatur des Kondensators kann dabei sowohl aus einer erhöhten Wechselstrombelastung, dem so genannten Rippel-Strom, als auch aus einer erhöhten Umgebungstemperatur resultieren.

Zwar ist es aus der EP 0 693 822 A1 bekannt, zur Reduzierung oder Minimierung des Ripple-Stroms zwei Motoren unabhängigen voneinander über jeweils einen Leistungsschalter mit einem bestimmten Tastverhältnis anzusteuern, beispielsweise um die beiden Leistungsschalter zeitgleich oder zeitlich versetzt einzuschalten oder auszuschalten. Hierdurch soll erreicht werden, dass der maximale Ripple-Strom in einer Kondensatorbank nicht größer ist als beim Betrieb eines einzelnen Motors.

Der Erfindung liegt die Aufgabe zu Grunde, ein besonders geeignetes Verfahren zum Betreiben einer Anzahl von elektrischen Lasten oder Verbrauchern, insbesondere von mindestens zwei Elektromotoren, anzugeben, mit dem eine möglichst hohe Betriebssicherheit bei gleichzeitig möglichst geringem Aufwand erzielt werden soll. Des Weiteren soll eine danach arbeitende elektronische Ansteuerungsvorrichtung angegeben werden.

Bezüglich des Verfahrens wird diese Aufgabe erfindungsgemäß gelöst durch die Merkmale des Anspruchs 1. Dazu wird der Laststrom des jeweiligen Verbrauchers oder Elektromotors über ein Stellglied eingestellt, wobei die Stellglieder mit einer auf eine Taktperiode bezogenen Puls- und Pausendauer in einem vorgegebenen Tastverhältnis mit gegeneinander phasenversetzten Taktperioden angesteuert werden. Zur Regelung und zum Schutz der Elektromotoren werden deren Last- oder Motorstrom gemessen, wobei eine Strommessung der Lastströme der beiden Elektromotoren aus einem gemeinsamen Stromsignal erfolgt, das der Summe der beiden Lastströme (Summenstromsignal) entspricht.

Unter Tastverhältnis wird hierbei der insbesondere prozentuale Anteil der Einschaltdauer des Stellgliedes bezogen auf die Periodendauer einer Taktperiode verstanden, wobei die Differenz zwischen der Periodendauer und der Einschaltdauer der Ausschaltdauer des Stellgliedes entspricht. Das Tastverhältnis gibt somit den relativen Anteil der Zeitdauer eines Einschaltzyklus und/oder der Zeitdauer eines Ausschaltzyklus an der Periodendauer einer Taktperiode an.

Aus dem Summenstromsignal können die einzelnen Lastströme, d. h. deren Stromwerte ermittelt werden. Dadurch ist die Implementierung lediglich einer einzelnen Strommessschaltung oder -einrichtung erforderlich, um dennoch beide Lastströme zuverlässig zu messen. Hierzu wird innerhalb der Pausendauer einer Taktperiode der Laststrom jeweils eines der Elektromotoren gemessen. Dabei erfolgt die Abtastung des gemeinsamen Stromsignals zyklisch, vorzugsweise zeitlich in der Mitte der jeweiligen Pausendauer.

Gemäß einer vorteilhaften Ausgestaltung wird während der Pausendauer der Taktperiode des einem ersten Elektromotor zugeordneten Stellgliedes der Laststrom des zweiten Elektromotors erfasst. Analog wird während der Pausendauer der Taktperiode des dem zweiten Elektromotor zugeordneten Stellgliedes der Laststrom des ersten Elektromotors erfasst. Die Lastströme der beiden Elektromotoren werden daher zweckmäßigerweise zueinander zeitversetzt gemessen.

Besonders effektiv erfolgt eine.Strommessung der Lastströme der beiden Elektromotoren, wenn die diesen zugeordneten Stellglieder mit gegeneinander um 180° phasenversetzten Taktperioden angesteuert werden. Die Tastverhältnisse, mit denen die Stellglieder der beiden Elektromotoren angesteuert werden, sind dabei vorzugsweise gleich. Dies bedeutet, dass die Taktperioden für beide Stellglieder dieselbe Zeit- oder Periodendauer aufweisen, wobei die jeweiligen Pulsdauern und die jeweiligen Pausendauern innerhalb einer Taktperiode für beide Stellglieder zeitlich gleich oder aber auch unterschiedlich lang sein können. Das Tastverhältnis liegt dabei oberhalb von 0% und unterhalb von 100%, beispielsweise zwischen 10% und 90%. Auch können zuverlässige Strommessungen der einzelnen Lastströme bei einem Tastverhältnis größer oder gleich 95% durchgeführt werden. Bei einem Tastverhältnis von nahezu 100% besteht die Möglichkeit, einen Motor kurzzeitig abzuschalten, um den Lastrom des anderen Motors zu messen.

Das Verfahren eignet sich daher analog auch allgemein zur Strommessung von mindestens zwei in einem vorgebbaren, vorzugsweise gleichen Tastverhältnis angesteuerten elektrischen Verbrauchern, beispielsweise von ohmschen oder induktiven Lasten.

Bezüglich der Vorrichtung wird die genannte Aufgabe erfindungsgemäß gelöst durch die Merkmale des Anspruchs 11. Vorteilhafte Ausgestaltungen sind Gegenstand der auf diesen rückbezogenen Unteransprüche.

Das dem jeweiligen Elektromotor zugeordnete Stellglied der Ansteuerungsvorrichtung umfasst insbesondere einen elektronischen Leistungsschalter oder-halbleiter, z. B. einen MOS-Feldeffekttransistor (MOSFET), und einen diesen mit dem vorgegebenen Tastverhältnis steuernden oder betreibenden PWM-Generator. Dabei ist die auf eine Taktperiode bezogene Puls- und Pausendauer des jeweiligen PWM-Generators in Abhängigkeit vom Betriebszustand des Elektromotors eingestellt, indem das Tastverhältnis die Einschaltzyklen und die Ausschaltzyklen des Leistungsschalters vorgibt. Während beim Betrieb der Elektromotoren die jeweiligen Stellglieder oder PWM-Generatoren zweckmäßigerweise mit dem gleichen Tastverhältnis angesteuert werden, können die Stromwerte oder -amplituden der Lastströme der Elektromotoren unterschiedlich sein. Auch können, insbesondere bei einem Regelkreis, die Tastverhältnisse unterschiedlich sein.

Die Strommessung erfolgt zweckmäßigerweise mit einem Stromsensor, beispielsweise mit einem Shunt, über den die Lastströme der beiden Stellglieder gemeinsam geführt sind, und an dem das gemeinsame Summenstromsignal abgreifbar ist. Dazu ist ein Taktgenerator vorgesehen, der ein Taktsignal zum Auslesen des Stromwertes des jeweiligen Laststromes innerhalb der Pausendauer des jeweils anderen Laststromsignals generiert. Das Taktsignal steuert einen Analog-Digital-Wandler, der mit dem Stromsensor, vorzugsweise über einen das Summenstromsignal verstärkenden Signalverstärker, verbunden ist.

Nachfolgend werden Ausführungsbeispiele der Erfindung anhand einer Zeichnung näher erläutert. Darin zeigen:
- FIG 1: in einem Blockschaltbild eine nach dem erfindungsgemäßen Verfahren arbeitende Ansteuerungs-Vorrichtung zum Betrieb von zwei Elektromotoren,
- FIG 2: in einer Diagramm-Darstellung simulierte Signalverläufe zur motorspezifischen Laststromermittlung bei einem Tastverhältnis (duty-cycle) von 30%, und
- FIG 3: in einer Darstellung gemäß FIG 2 simulierte Signalverläufe bei einem Tastverhältnis (duty-cycle) von 90%.

Einander entsprechende Teile sind in allen Figuren mit den gleichen Bezugszeichen versehen.

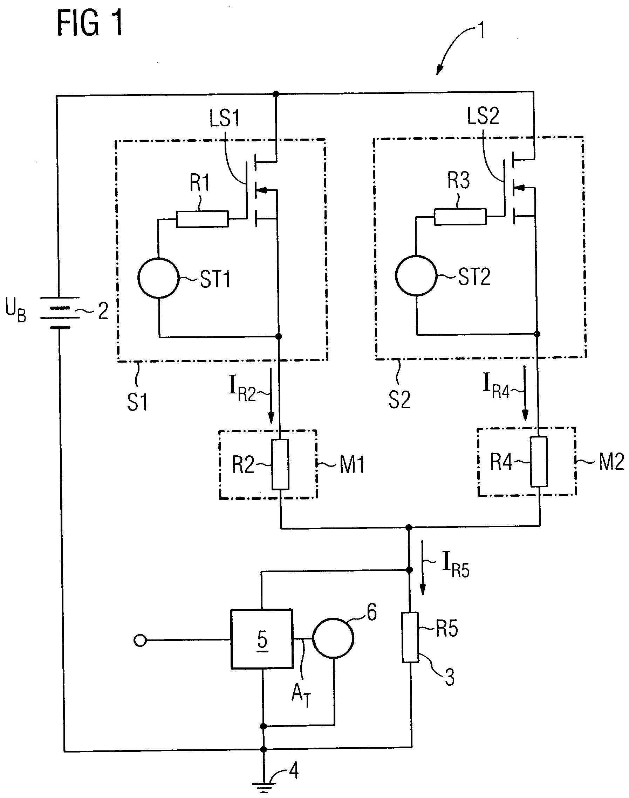

Die in FIG 1 dargestellte elektronische Ansteuerungsvorrichtung 1 umfasst zwei an eine gemeinsame Strom- oder Spannungsquelle 2 angeschlossene Stellglieder S1 und S2. Die Stellglieder S1 und S2 sind jeweils einem mit einer Freilaufdiode beschalteten Elektromotor M1, M2 zugeordnet, der in der dargestellten Simulationsschaltung durch einen ohmschen Widerstand R2 bzw. R4 repräsentiert ist.

Die Elektromotoren M1, M2 sind beispielsweise Lüfter- oder Gebläsemotoren für den Motorkühler eines Kraftfahrzeugs. Als Spannungsquelle 2 dient bei dieser Anwendung das Bordnetz oder die Bordbatterie des Kraftfahrzeugs, die eine Gleichspannung von z.B. 9V bis 16V als Betriebsspannung U zur Verfügung stellt. Die Elektromotoren M1, M2 werden mit einem Motor- oder Laststrom I_{R2} bzw. I_{R4} betrieben, der versorgungsseitig von der Spannungsquelle 2 bereit gestellt wird.

Das jeweilige Stellglied S1, S2 umfasst einen steuerbaren Schalter LS1, LS2 und eine diesen ansteuernde Steuereinrichtung ST1 bzw. ST2. Als steuerbare Schalter LS1, LS2 sind bevorzugt Leistungshalbleiter, beispielsweise MOS-FeldeffektTransistoren (MOSFET), eingesetzt. Die Steuereinrichtungen ST1, ST2 sind zweckmäßigerweise Pulsweitenmodulator-Generatoren (PWM- Generatoren). Diese steuern die nachfolgend als Leistungsschalter oder -steller LS1, LS2 bezeichneten Leistungshalbleitern in einem vorgebbaren Takt zwischen einer geöffneten und einer geschlossenen Stellung mit einem bestimmten, nachfolgend auch als duty-cycle d_{C} bezeichneten relativen Tastverhältnis t_{ON}/t_{P}, mit t_{P} = t_{ON} + t_{OFF}, zweckmäßigerweise über einen Widerstand R1 bzw. R3, an.

Dies bedeutet, dass der jeweilige Leistungsschalter LS1, LS2 für einen bestimmten prozentualen Anteil (x%) der Zeitdauer einer Taktperiode t_{P}, beispielsweise 30% von 100*µ*s, eingeschaltet ist (t_{ON} = 0,3 * 100*µ*s = 30*µ*s). Demzufolge ist der Leistungsschalter LS1, LS2 entsprechend 70% der Zeitdauer der Taktperiode t_{P} ausgeschaltet (t_{OFF} = 0,7 * 100*µ*s = 70*µ*s). Die Einschaltdauer t_{ON} entspricht dabei der Pulsdauer, deren relativer Anteil an der auf "1" normierten Taktperiode t_{P} 30% ist. Die Pausendauer t_{OFF} entspricht der Ausschaltdauer t_{OFF} mit einem relativen Anteil von 70% an der normierten Taktperiode t_{P}.

Die Tastverhältnisse t_{ON}/t_{P} oder der duty-cycle d_{C} der beiden Stellglieder S1 und S2 sind dabei zweckmäßigerweise gleich, jedoch gegeneinander phasenversetzt. Dies bedeutet, dass einer der beiden Leistungsschalter LS1, LS2 innerhalb der eingestellten Pulsdauer t_{ON} geöffnet ist, während gleichzeitig der andere Leistungsschalter LS2 bzw. LS1 innerhalb der eingestellten Pausendauer t_{OFF} geschlossen ist.

Die beiden Stellglieder S1 und S2 sowie die diesen zugeordneten Elektromotoren M1 bzw. M2 sind über einen gemeinsamen Stromsensor 3 an ein Bezugspotential, d. h. an Masse oder Ground 4 geführt. Der Stromsensor 3 ist beispielsweise ein Shunt in Form eines ohmschen Wiederstandes R5, an dem ein über diesen fließender Summenlaststrom I_{R5} als diesem proportionales Spannungssignal abgreifbar ist. Der über diesen Shunt R5 gemessene Summenlaststrom I_{R5} entspricht der Summe der Stromwerte der Lastströme I_{R2} und I_{R4}. Der jeweilige Laststrom I_{R2}, I_{R4} entspricht dabei dem jeweiligen Motorstrom während der Einschaltdauer des Leistungsschalters LS1 bzw. LS2. Ein eventueller Freilaufstrom über (nicht dargestellte) Freilaufdioden wird vom Shunt R5 nicht erfasst. Das entsprechende Strom- oder Spannungssignal I_{R5} wird einem Analog-Digital-Wandler 5 zugeführt, der seinerseits über einen Taktgenerator 6 angesteuert ist.

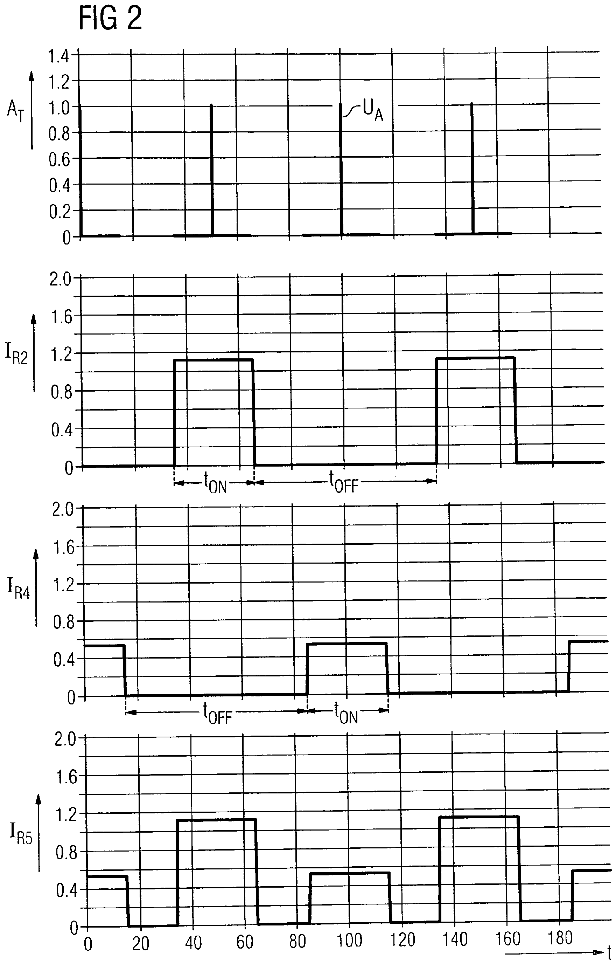

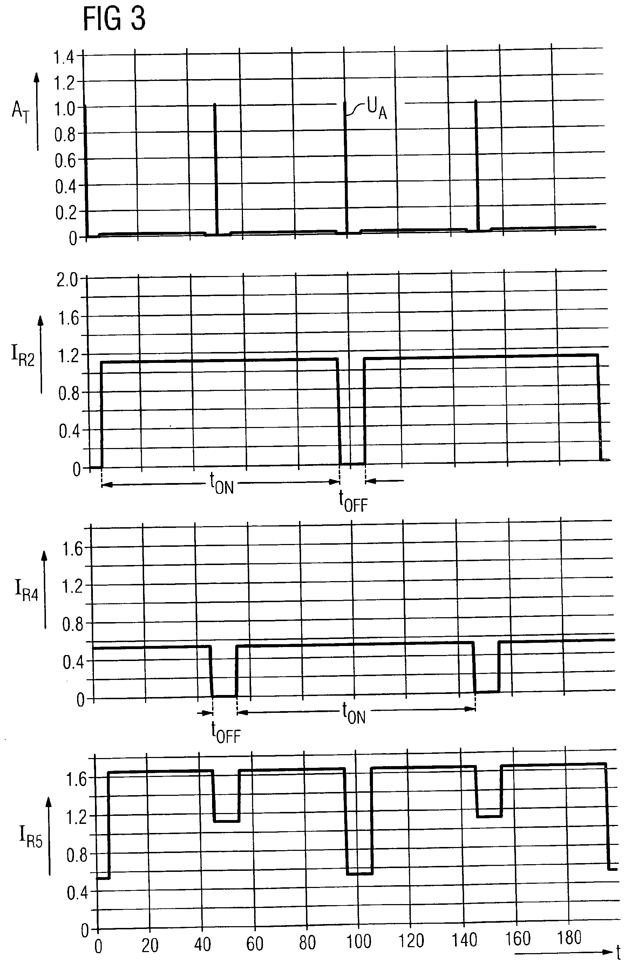

Das vom Taktgenerator 5 erzeugte Takt- oder Abtastsignal A_{T} ist in den FIG 2 und 3 in dem jeweils oberen Diagramm dargestellt. Erkennbar dort sind zyklisch über die Zeit t erzeugte Abtast- oder Spannungsimpulse U_{A}[V]. Die in den Figuren 2 und 3 unteren Diagramme zeigen den Signalverlauf des sich aus den beiden Lastströmen I_{R2}[A] und I_{R4}[A] zusammensetzenden, nachfolgend als Summenstromsignal I_{R5} bezeichneten Stromsignals, das am Stromsensor 3 abgreifbar ist. Dabei ist das Laststromsignal I_{R4} über die Zeit t des Leistungsstellers oder - schalters LS2 in dem zweiten Diagramm von unten dargestellt, während das Laststromsignal I_{R2} über die Zeit t des anderen Leistungsstellers bzw. -stellers LS1 in dem dritten Diagramm von unten bzw. dem zweiten Diagramm von oben in den jeweiligen Figuren 2 und 3 gezeigt ist.

Die Darstellungen der Figuren 2 und 3 unterscheiden sich darin, dass die Diagramme I_{R2}(t), I_{R4}(t) und I_{R5}(t) (in Figur 2) bei einem Tastverhältnis t_{ON}/t_{P} oder duty-cycle d_{C} von 30% - und damit ohne Überlappung der Lastströmen I_{R2}[A] und I_{R4}[A] - simuliert worden ist, während die Signalverläufe I_{R2}(t), I_{R4}(t) und I_{R5}(t) in FIG 3 bei einem Tastverhältnis t_{ON}/t_{P} bzw. duty-cycle d_{C} von 90% - und damit bei einer Überlappung der Lastströmen I_{R2}[A] und I_{R4}[A] - aufgenommen sind.

Aus FIG 2 ist ersichtlich, dass die Pulsdauern t_{ON} des Laststromsignal I_{R2}(t) des Elektromotors M1 zeitlich zusammenfällt mit der Pausendauer t_{OFF} des Laststromsignal I_{R4}(t) des Leistungsstellers LS2. Analog fallen die Pulsdauern t_{ON} des Laststromsignals I_{R4}(t) zeitlich in die Pausendauern t_{OFF} des Laststromsignals I_{R2} (t). Die zugehörigen Taktperioden t_{P} der beiden getakteten Laststromsignale I_{R2}(t) und I_{R4}(t) sind hierbei um 180° gegeneinander phasenverschoben.

Während der Pulsdauern t_{ON} sind die jeweiligen Leistungsschalter LS1 und LS2 geöffnet und während der Pausendauern t_{OFF} geschlossen oder gesperrt. Während hierzu die beiden PWM-Steller LS1 bzw. LS2 mit demselben Tastverhältnis t_{ON}/t_{P} = 30% angesteuert werden, können die Lastströme I_{R2} bzw. I_{R4} hinsichtlich der Stromwerte oder -amplituden unterschiedlich sein.

Auf Grund der erforderlichen oder vorgesehenen zwei Abtastwerte je Taktperiode ist die Taktfrequenz oder die zeitliche Abfolge der Abtastimpulse U_{A} doppelt so groß wie die zeitliche Abfolge der Puls- und Pausendauern t_{ON} bzw. t_{OFF} der duty-cycle d_{C}. Die Abtastimpulse U_{A} liegen zweckmäßigerweise in der Mitte der Pausendauern t_{OFF} sowohl des Laststromsignals I_{R2}(t) als auch des Laststromsignals I_{R4}(t). Im Summenstromsignal I_{R5}(t) ist somit während jedes Abtastimpulses U_{A} der Stromwert einer der Lastströme I_{R2} oder I_{R4} der Elektromotoren M1 bzw. M2 messbar. Somit kann mittels eines einzigen Stromsensors 3 sowohl der Laststrom I_{R2} des Elektromotors M1 als auch der Laststrom I_{R4} des Elektromotors M2 zuverlässig erfasst werden, indem diese aus dem gemeinsamen Summenstromsignal I_{R5}(t) zueinander zeitlich versetzt erfasst werden.

FIG 3 zeigt analog die Verhältnisse bei einem duty-cycle d_{C} von 90%. Der Unterschied zu dem in FIG 2 dargestellten duty-cycle d_{C} von 30% besteht darin, dass die Pulsdauern t_{ON} gegenüber den Pausendauern t_{OFF} in den Diagrammen nach FIG 2 vergleichsweise kurz und in den Diagrammen nach FIG 3 vergleichsweise lang sind. Dies führt im Summenstromsignal I_{R5}(t) nach FIG 3 dazu, dass während der Pausendauern t_{OFF} der beiden Laststromsignale I_{R2}(t) und I_{R4}(t) der Summenstrom I_{R5} einen von Null verschiedenen Wert annimmt. Dieser entspricht dem Stromwert des jeweiligen Laststroms I_{R4} bzw. I_{R2}. Während der Pausendauer t_{OFF} des jeweiligen Laststromsignals I_{R2}(t) und I_{R4}(t) ist daher der Stromwert SW des jeweils anderen Laststroms I_{R4} bzw. I_{R2} aus dem Summenstromsignal I_{R5}(t) exakt erfassbar. Somit kann auch bei einem duty-cycle d_{C} > 50% der jeweilige Laststrom I_{R2} und I_{R4} aus dem Summenstromsignal I_{R5}(t) erfasst werden, wenn die Abtastimpulse U_{A} zeitlich in die jeweiligen Pausendauern t_{OFF} gelegt werden, vorzugsweise wiederum zumindest annähernd in die Mitte der Pausendauern t_{OFF}.

## Patentansprüche

1. Verfahren zum Betreiben von mindestens zwei Elektromotoren (M1, M2), wobei einem ersten Elektromotor (M1) ein erstes Stellglied (S1) zugeordnet ist und wobei einem zweiten Elektromotor (M2) ein zweites Stellglied (S2) zugeordnet ist,
wobei die beiden Stellglieder (S1, S2) jeweils mit einer auf eine Taktperiode (tₚ) bezogenen Puls- und Pausendauer (t_{ON}, T_{OFF}) in einem vorgegebenen Tastverhältnis (d_{c}) und mit gegeneinander phasenversetzten Taktperioden (tₚ) angesteuert werden,
wobei die Lastströme (I_{R2}, I_{R4}) der Elektromotoren (M1, M2) jeweils über das diesen zugeordnete Stellglied (S1, S2) eingestellt wird,
wobei das Verfahren **dadurch gekennzeichnet ist, dass** die Lastströme (I_{R2}, I_{R4}) der beiden Elektromotoren (M1, M2) (M1, M2) jeweils innerhalb der jeweiligen Pausendauer (T_{OFF}) einer diesem zugeordneten Taktperiode (tₚ) gemessen wird, und
wobei die Lastströme (I_{R2}, I_{R4}) der beiden Elektromotoren (M1, M2) in einem diesen gemeinsamen, der Summe der beiden Lastströme (I_{R2}, I_{R4}) entsprechenden Stromsignal (Summenstromsignal) (IR5) gemessen werden.

2. Verfahren nach Anspruch 1, bei dem das Summenstromsignal (I_{R5}) zeitlich in der Mitte der jeweiligen Pausendauer (t_{OFF}) abgetastet wird.

3. Verfahren nach Anspruch 1 oder 2, bei dem die Lastströme (I_{R2}, I_{R4}) der beiden Elektromotoren (M1, M2) zueinander zeitversetzt erfasst werden.

4. Verfahren nach einem der Ansprüche 1 bis 3, bei dem während der Pausendauer (T_{OFF}) der Taktperiode (t_{P}) des einem ersten Elektromotor (M1, M2) zugeordneten Stellgliedes (S1, S2) der Laststrom (I_{R4}, I_{R2}) des zweiten Elektromotors (M2 bzw. M1) erfasst wird.

5. Verfahren nach einem der Ansprüche 1 bis 4, bei dem die Stellglieder (S1, S2) mit gegeneinander um 180° phasenversetzten Taktperioden (t_{P}) angesteuert werden.

6. Verfahren nach einem der Ansprüche 1 bis 5, bei dem die Stellglieder (S1, S2) mit dem gleichen Tastverhältnis (d_{c}) angesteuert werden.

7. Verfahren nach einem der Ansprüche 1 bis 6, bei dem die Stellglieder (S1, S2) mit einem Tastverhältnis (d_{c}) größer 0% und kleiner 100% angesteuert werden.

8. Vorrichtung zum Betreiben von mindestens zwei Elektromotoren (M1, M2),
mit einem ersten Elektromotor (M1) und mindestens einem zweiten Elektromotoren (M2),
mit einem dem ersten Elektromotor (M1) zugeordneten ersten Stellglied (S1) und mit einem dem zweiten Elektromotor (M2) zugeordnet zweiten Stellglied (S2), wobei die beiden Stellglieder (S1, S2) derart angeordnet und ausgebildet sind, dass sie jeweils mit einer auf eine Taktperiode (tₚ) bezogenen Puls- und Pausendauer (t_{ON}, T_{OFF}) in einem vorgegebenen Tastverhältnis (d_{c}) und mit gegeneinander phasenversetzten Taktperioden (tₚ) ansteuerbar sind und dass die Lastströme (I_{R2}, I_{R4}) der Elektromotoren (M1, M2) jeweils über das diesen zugeordnete Stellglied (S1, S2) einstellbar sind, wobei die Vorrichtung **dadurch gekennzeichnet ist, dass** sie ausgestattet ist mit einem den beiden Stellgliedern (S1, S2) zugeordneten gemeinsamen Stromsensor (5), der dazu ausgebildet und angeordnet ist, dass er die Lastströme (I_{R2}, I_{R4}) der beiden Elektromotoren (M1, M2) aus einem gemeinsamen Stromsignal (I_{R5}) erfasst, indem die Lastströme (I_{R2}, I_{R4}) der Elektromotoren (M1, M2) jeweils innerhalb der jeweiligen Pausendauer (T_{OFF}) einer diesem zugeordneten Taktperiode (tₚ) gemessen werden und indem die Lastströme (I_{R2}, I_{R4}) der beiden Elektromotoren (M1, M2) in einem diesen gemeinsamen, der Summe der beiden Lastströme (I_{R2}, I_{R4}) entsprechenden Stromsignal (Summenstromsignal) (IR5) gemessen werden.

9. Vorrichtung nach Anspruch 8, mit einem Taktgenerator (6), der innerhalb jeder Pausendauer (t_{OFF}) der beiden gegeneinander phasenversetzten Taktperioden (t_{P}) ein Taktsignal (A_{T}) zur Erfassung des jeweiligen Laststroms (I_{R2}, I_{R4}) erzeugt.

10. Vorrichtung nach Anspruch 8 oder 9, wobei innerhalb der Pausendauer (T_{OFF}) einer Taktperiode (tₚ) eine Messung des Laststroms (I_{R2}, I_{R4}) einer der Elektromotoren (M1, M2) erfolgt.

11. Vorrichtung nach einem der Ansprüche 8 bis 10, bei der das jeweilige Stellglied (S1, S2) einen elektronischen Leistungsschalter (LS1, LS2) und einen diesen mit dem vorgegebenen Tastverhältnis (d_{c}) steuernden PWM-Steller (ST1, ST2) umfasst.

12. Vorrichtung nach Anspruch 11, bei der die auf eine Taktperiode (t_{P}) bezogenen Puls- und Pausendauern (t_{ON}, t_{OFF}) der beiden PWM-Steller (ST1, ST2) derart eingestellt sind, dass der Einschaltzyklus (t_{ON}) eines ersten Leistungsschalters (LS1, LS2) innerhalb des Ausschaltzyklus (t_{OFF}) des zweiten Leistungsschalters (LS2, LS1) liegt.

## Claims

1. Method of operating at least two electric motors (M1, M2),
wherein a first electric motor (M1) is assigned a first actuator (S1) and a second electric motor (M2) is assigned a second actuator (S2),
wherein the two actuators (S1, S2) are each activated with a pulse and pause duration (t_{ON}, T_{OFF}) relative to a clock period (tₚ) in a predefined duty cycle (d_{c}) and with mutually phase-shifted clock periods (t_{P}),
wherein the load currents (I_{R2}, I_{R4}) of the electric motors (M1, M2) are each adjusted by means of the actuator (S1, S2) assigned thereto,
wherein the method is **characterised in that** the load currents (I_{R2}, I_{R4}) of the two electric motors (M1, M2) are each measured within the respective pause duration (T_{OFF}) of a clock period (tₚ) assigned thereto, and
wherein the load currents (I_{R2}, I_{R4}) of the two electric motors (M1, M2) are measured in a current signal (summation current signal) (I_{R5}) common to the two load currents (I_{R2}, I_{R4}) and corresponding to the sum thereof.

2. Method according to claim 1, wherein the summation current signal (I_{R5}) is sampled time-wise in the middle of the respective pause duration (t_{OFF}).

3. Method according to claim 1 or 2, wherein the load currents (I_{R2}, I_{R4}) of the two electric motors (M1, M2) are detected with a time-shift relative to one another.

4. Method according to any one of claims 1 to 3, wherein during the pause duration (T_{OFF}) of the clock period (tₚ) of the actuator (S1, S2) assigned to a first electric motor (M1, M2) the load current (I_{R4}, I_{R2}) of the second electric motor (M2 resp. M1) is detected.

5. Method according to any one of claims 1 to 4, wherein the actuators (S1, S2) are activated with clock periods (tₚ) that are phase-shifted by 180° relative to one another.

6. Method according to any one of claims 1 to 5, wherein the actuators (S1, S2) are activated with the identical duty cycle (d_{c}).

7. Method according to any one of claims 1 to 6, wherein the actuators (S1, S2) are activated with a duty cycle (d_{c}) greater than 0% and less than 100%.

8. Apparatus for operating at least two electric motors (M1, M2),
having a first electric motor (M1) and at least a second electric motor (M2),
having a first actuator (S1) assigned to the first electric motor (M1) and a second actuator (S2) assigned to the second electric motor (M2), wherein the two actuators (S1, S2) are arranged and configured such that they can each be activated with a pulse and pause duration (t_{ON}, T_{OFF}) relative to a clock period (tₚ) in a predefined duty cycle (d_{c}) and with mutually phase-shifted clock periods (tₚ), and in that the load currents (I_{R2}, I_{R4}) of the electric motors (M1, M2) are each adjustable by means of the actuator (S1, S2) assigned thereto,
wherein the apparatus is **characterised in that** it is provided with a common current sensor (5) assigned to the two actuators (S1, S2) which is configured and arranged such that it detects the load currents (I_{R2}, I_{R4}) of the two electric motors (M1, M2) from a common current signal (I_{R5}), the load currents (I_{R2}, I_{R4}) of the electric motors (M1, M2) each being measured within the respective pause duration (T_{OFF}) of a clock period (tₚ) assigned thereto and the load currents (I_{R2}, I_{R4}) of the two electric motors (M1, M2) being measured in a current signal (summation current signal) (I_{R5}) common thereto corresponding to the sum of the two load currents (I_{R2}, I_{R4}).

9. Apparatus according to claim 8 with a clock generator (6) which generates a clock signal (A_{T}) for detecting the respective load current (I_{R2}, I_{R4}) within each pause duration (t_{OFF}) of the two mutually phase-shifted clock periods (tₚ).

10. Apparatus according to claim 8 or 9, wherein a measurement of the load current (I_{R2}, I_{R4}) of any one of the electric motors (M1, M2) takes place within the pause duration (T_{OFF}) of a clock period (t_{P}).

11. Apparatus according to any one of claims 8 to 10 wherein the respective actuator (S1, S2) comprises an electronic circuit-breaker (LS1, LS2) and a PWM actuator (ST1, ST2) controlling it with the predefined duty cycle (d_{c}).

12. Apparatus according to claim 11 wherein the pulse and pause durations (t_{ON}, T_{OFF}) of the two PWM actuators (ST1, ST2) relative to a clock period (tₚ) are adjusted such that the switch-on cycle (t_{0N}) of a first circuit-breaker (LS1, LS2) is within the switch-off cycle (T_{OFF}) of the second circuit-breaker (LS2, LS1).

## Revendications

1. Procédé pour faire fonctionner au moins deux moteurs électriques (M1, M2), un premier moteur électrique (M1) étant associé à un premier actionneur (S1) et un deuxième moteur électrique (M2) étant associé à un deuxième actionneur (S2),
les deux actionneurs (S1, S2) étant chacun activés avec une durée d'impulsion et de pause (t_{ON}, T_{OFF}) rapportée à une période d'horloge (tₚ) selon un rapport cyclique (d_{c}) prédéfini et avec des périodes d'horloge (tₚ) déphasées les unes par rapport aux autres,
dans lequel les courants de charge (I_{R2}, I_{R4}) des moteurs électriques (M1, M2) sont réglés à chaque fois par l'actionneur (S1, S2) qui leur est associé,
le procédé étant **caractérisé en ce que**
les courants de charge (I_{R2}/I_{R4}) des deux moteurs électriques (M1, M2) sont mesurés à chaque fois pendant la durée de pause respective (T_{OFF}) d'une période d'horloge (tₚ) qui leur est associée, et
dans lequel les courants de charge (I_{R2}, I_{R4}) des deux moteurs électriques (M1, M2) sont mesurés dans un signal de courant qui leur est commun et qui correspond à la somme des deux courants de charge (I_{R2}, I_{R4}) (signal de courant somme) (I_{R5}).

2. Procédé selon la revendication 1, dans lequel le signal de courant somme (I_{R5}) est échantillonné dans le temps au milieu de la durée de pause respective (t_{OFF}).

3. Procédé selon la revendication 1 ou 2, dans lequel les courants de charge (I_{R2}, I_{R4}) des deux moteurs électriques (M1, M2) sont détectés de manière décalée dans le temps l'un par rapport à l'autre.

4. Procédé selon l'une des revendications 1 à 3, dans lequel le courant de charge (I_{R4}, I_{R2}) du deuxième moteur électrique (M2 ou M1) est détecté pendant la durée de pause (T_{OFF}) de la période d'horloge (tₚ) de l'actionneur (S1, S2) associé à un premier moteur électrique (M1, M2).

5. Procédé selon l'une des revendications 1 à 4, dans lequel les actionneurs (S1, S2) sont activés avec des périodes d'horloge (tₚ) déphasées de 180° les unes par rapport aux autres.

6. Procédé selon l'une des revendications 1 à 5, dans lequel les actionneurs (S1, S2) sont activés avec le même rapport cyclique (d_{c}).

7. Procédé selon l'une des revendications 1 à 6, dans lequel les actionneurs (S1, S2) sont activés avec un rapport cyclique (d_{c}) supérieur à 0 % et inférieur à 100 %.

8. Dispositif pour faire fonctionner au moins deux moteurs électriques (M1, M2),
avec un premier moteur électrique (M1) et au moins un deuxième moteur électrique (M2),
avec un premier actionneur (S1) associé au premier moteur électrique (M1) et avec un deuxième actionneur (S2) associé au deuxième moteur électrique (M2), les deux actionneurs (S1, S2) étant disposés et conçus de telle sorte qu'ils peuvent être activés chacun avec une durée d'impulsion et de pause (t_{ON}, T_{OFF}) rapportée à une période d'horloge (tₚ) selon un rapport cyclique (d_{c}) prédéfini et avec des périodes d'horloge (tₚ) déphasées les unes par rapport aux autres, et que les courants de charge (I_{R2}, I_{R4}) des moteurs électriques (M1, M2) peuvent être réglés à chaque fois par l'actionneur (S1, S2) qui leur est associé,
le dispositif étant **caractérisé en ce qu'**il est équipé d'un capteur de courant commun (5) associé aux deux actionneurs (S1, S2), qui est conçu et disposé pour détecter les courants de charge (I_{R2}, I_{R4}) des deux moteurs électriques (M1, M2) à partir d'un signal de courant commun (I_{R5}) en mesurant les courants de charge (I_{R2}, I_{R4}) des moteurs électriques (M1, M2) à chaque fois pendant la durée de pause respective (T_{OFF}) d'une période d'horloge (tₚ) qui leur est associée et en mesurant les courants de charge (I_{R2}, I_{R4}) des deux moteurs électriques (M1, M2) dans un signal de courant qui leur est commun et qui correspond à la somme des deux courants de charge (I_{R2}, I_{R4}) (signal de courant somme) (I_{R5}).

9. Dispositif selon la revendication 8, avec un générateur d'horloge (6) qui génère un signal d'horloge (A_{T}) pour détecter le courant de charge respectif (I_{R2}, I_{R4}) pendant chaque durée de pause (t_{OFF}) des deux périodes d'horloge (tₚ) déphasées l'une par rapport à l'autre.

10. Dispositif selon la revendication 8 ou 9, dans lequel une mesure du courant de charge (I_{R2}, I_{R4}) d'un des moteurs électriques (M1, M2) a lieu pendant la durée de pause (T_{OFF}) d'une période d'horloge (tₚ).

11. Dispositif selon l'une des revendications 8 à 10, dans lequel l'actionneur respectif (S1, S2) comprend un commutateur électronique de puissance (LS1, LS2) et un actionneur PWM (ST1, ST2) activant ce dernier avec le rapport cyclique prédéfini (d_{c}).

12. Dispositif selon la revendication 11, dans lequel les durées d'impulsion et de pause (t_{ON}, t_{OFF}), rapportées à une période d'horloge (tₚ), des deux actionneurs PWM (ST1, ST2), sont réglées de telle sorte que le cycle d'activation (t_{ON}) d'un premier commutateur de puissance (LS1, LS2) se situe pendant le cycle de désactivation (T_{OFF}) du deuxième commutateur de puissance (LS2, LS1).
